# EUROPÄISCHE PATENTSCHRIFT

(11) **EP 2 996 227 B1**
(45) Veröffentlichungstag und Bekanntmachung des Hinweises auf die Patenterteilung: **11.10.2017**
(21) Anmeldenummer: 15181552.9
(22) Anmeldetag: 19.08.2015
(51) Int. Cl.: F04D 25/06, H02K 5/22, H02K 7/14, F04D 23/00, F04D 29/02, F04D 29/60

(54) **GEBLÄSEGEHÄUSE, INSBESONDERE FÜR EIN GEBLÄSE FÜR EIN FAHRZEUGHEIZGERÄT**
FAN HOUSING, ESPECIALLY FOR A FAN FOR A VEHICLE HEATING DEVICE
BOÎTIER DE VENTILATEUR, EN PARTICULIER POUR UN VENTILATEUR POUR UN APPAREIL DE CHAUFFAGE POUR VÉHICULE

(30) Priorität: 10.09.2014 DE 102014218115
(43) Veröffentlichungstag der Anmeldung: 16.03.2016
(73) Patentinhaber: Eberspächer Climate Control Systems GmbH & Co. KG, 73730 Esslingen (DE)
(72) Erfinder: Humburg, Michael, 73035 Göppingen (DE); Eppler, Hermann, 72336 Balingen (DE)
(74) Vertreter: RLTG

(56) Entgegenhaltungen:
- EP-A1- 1 458 078
- DE-A1-102010 041 139

## Beschreibung

Die vorliegende Erfindung betrifft ein Gebläsegehäuse, insbesondere für ein Gebläse für ein Fahrzeugheizgerät, welches Gebläsegehäuse ein Motorgehäuse mit einer Umfangswandung und einer ersten Bodenwandung in einem ersten axialen Endbereich der Umfangswandung umfasst.

In Fahrzeugheizgeräten zum Fördern von Verbrennungsluft eingesetzte Gebläse können als so genannte Seitenkanalgebläse ausgebildet sein. In einem von einer Umfangswandung umschlossenen Innenraum eines Motorgehäuses ist ein Elektromotor mit einem Stator und einem Rotor und einer diesem zugeordneten Rotorwelle angeordnet. An einem ersten axialen Endbereich der Umfangswandung ist eine erste Bodenwandung vorgesehen, welche einerseits den Innenraum des Motorgehäuses axial begrenzt und andererseits sich radial über die Umfangswandung hinaus erstreckt. In dieser Bodenwandung ist an der von der Umfangswandung abgewandten Axialseite ein ringartiger Förderkanal angeordnet, der von einem an der Rotorwelle getragenen Förderrad überdeckt ist. Im Rotationsbetrieb des Förderrads wird somit unter Druckaufbau Luft entlang des ringartigen Förderkanals gefördert. Die in einem Eintrittsbereich in den Förderkanal eintretende Luft wird in einem den ringartigen Förderkanal in Umfangsrichtung unterbrechenden Unterbrecherbereich aus dem Förderkanal ausgeleitet und beispielsweise in Richtung zu einer Brennkammer eines brennstoffbetriebenen Fahrzeugheizgeräts geleitet.

Ein derartiges Gebläse ist aus der DE 10 2010 041 139 A1 bekannt. Dieses Gebläse weist ein Gebläsegehäuse gemäß dem Oberbegriff des Anspruchs 1 auf. Zur elektrischen Kontaktierung des im Motorgehäuse aufgenommenen Elektromotors ist an der Umfangswandung des Motorgehäuses ein Steuergerätegehäusebereich vorgesehen, welcher an seiner von der Umfangswandung entfernt liegenden Seite eine durch ein Verschlusselement abgeschlossene Öffnung aufweist. An dem mit der Umfangswandung integral ausgebildeten Steuergerätegehäusebereich sind beidseits der Umfangswandung Kontaktierbereiche vorgesehen, über welche der Elektromotor an ein Fahrzeugleitungssystem angeschlossen werden kann. Ein entsprechender Kontaktierbereich ist in dem die Öffnung des Steuergerätegehäusebereichs abschließenden Verschlusselement vorgesehen.

Es ist die Aufgabe der vorliegenden Erfindung, ein Gebläsegehäuse, insbesondere für ein Gebläse für ein Fahrzeugheizgerät, vorzusehen, bei welchem bei einfachem Aufbau die Möglichkeit geschaffen ist, einen in dem Gebläsegehäuse angeordneten Elektromotor eines Gebläses zur Anbindung an ein Ansteuergerät elektrisch zu kontaktieren.

Erfindungsgemäß wird diese Aufgabe gelöst durch ein Gebläsegehäuse nach Anspruch 1, insbesondere für ein Gebläse für ein Fahrzeugheizgerät, umfassend ein Motorgehäuse mit einer Umfangswandung und einem ersten Bodenbereich in einem ersten axialen Endbereich der Umfangswandung, einen in einem zweiten axialen Endbereich der Umfangswandung mit dem Motorgehäuse verbindbaren und einen zweiten Bodenbereich bereitstellenden Motorgehäusedeckel, an dem Motorgehäusedeckel eine Kontaktieranordnung zur elektrischen Kontaktierung eines in dem Gebläsegehäuse anzuordnenden Elektromotors, wobei die Kontaktieranordnung in einem ersten Kontaktierbereich eine erste Kontaktierformation wenigstens an einer einem Innenraum des Motorgehäuses zugewandt zu positionierenden Seite des Motorgehäusedeckels umfasst, in einem nach außen frei liegenden zweiten Kontaktierbereich eine zweite Kontaktierformation umfasst, sowie eine die erste Kontaktierformation mit der zweiten Kontaktierformation leitend verbindende Leiterbahnformation umfasst.

Bei dem erfindungsgemäß aufgebauten Gebläsegehäuse erfolgt die elektrische Kontaktierung des in einem Innenraum des Motorgehäuses bzw. des Gebläsegehäuses anzuordnenden Elektromotors über den axial an das Motorgehäuse anzubindenden Motorgehäusedeckel. Dabei ist vorzugsweise der Aufbau derart, dass beim Anbringen des Motorgehäusedeckels am Motorgehäuse der erste Kontaktierbereich in Kontakt mit an einem Elektromotor vorgesehenen Motorkontaktelementen gebracht wird. In dem nach außen, also nach außen bezüglich des Innenraums des Motorgehäuses, frei liegenden zweiten Kontaktierbereich kann die elektrische Anbindung an ein Ansteuergerät, beispielsweise über einen Verbindungsstecker, erfolgen.

Um einerseits die Kontaktieranordnung gegen äußere Einflüsse und Beschädigungen zu schützen, andererseits eine leichte Handhabbarkeit gewährleisten zu können, wird vorgeschlagen, dass die Kontaktieranordnung wenigstens teilweise in ein Aufbaumaterial des Motorgehäusedeckels eingebettet ist. Eingebettet im Sinne der vorliegenden Erfindung bedeutet, dass die eingebettete Baugruppe bei Herstellung des Motorgehäusedeckels von dem Aufbaumaterial desselben umgeben, beispielsweise umgossen, wird und somit nach Verfestigung des Aufbaumaterials des Motorgehäusedeckels in dieses durch die Einbettung fest eingebunden ist.

Um einerseits eine zuverlässige elektrische Kontaktierung aller Motorkontaktelemente eines Elektromotors gewährleisten zu können, andererseits auch eine Variabilität in der elektrischen Kontaktierung bereitstellen zu können, wird vorgeschlagen, dass die erste Kontaktierformation eine Mehrzahl von ersten Kontaktelementen umfasst, dass die zweite Kontaktierformation in Zuordnung zu jedem ersten Kontaktelement wenigstens ein zweites Kontaktelement umfasst, und dass die Leiterbahnformation in Zuordnung zu jedem ersten Kontaktelement eine dieses mit wenigstens einem zugeordneten zweiten Kontaktelement verbindende Leiterbahn umfasst.

Ein besonders einfach zu realisierender Aufbau kann dadurch erhalten werden, dass wenigstens ein Leiterbahnelement mit einem zugeordneten ersten Kontaktelement oder/und wenigstens einem zugeordneten zweiten Kontaktelement integral ausgebildet ist, vorzugsweise durch Heraustrennen aus einem Leiterbahnmaterialrohling, wobei zur einfachen Herstellung eines jeweiligen elektrischen Kontakts vorgesehen sein kann, dass wenigstens ein erstes Kontaktelement oder/und wenigstens ein zweites Kontaktelement ein Steckkontaktelement umfasst.

Um den zweiten Kontaktierbereich dort vorsehen zu können, wo die elektrische Anbindung beispielsweise an ein Ansteuergerät oder einen dieses anschließenden Verbindungsstecker auch aus baulichen Gründen in einem Fahrzeugheizgerät besonders vorteilhaft ist, wird weiter vorgeschlagen, dass der Motorgehäusedeckel einen den ersten Kontaktierbereich mit dem zweiten Kontaktierbereich verbindenden, bei an dem Motorgehäuse angebrachtem Motorgehäusedeckel sich wenigstens bereichsweise entlang der Umfangswandung erstreckenden Verbindungssteg umfasst. Dabei kann weiter vorgesehen sein, dass der zweite Kontaktierbereich an einem von dem zweiten Bodenbereich entfernt liegenden Endbereich des Verbindungsstegs einen Kontaktsteckanschlussbereich umfasst.

Der einfache und kompakte Aufbau des erfindungsgemäßen Gebläsegehäuses kann dadurch noch unterstützt werden, dass der zweite Bodenbereich des Motorgehäusedeckels mit dem Verbindungssteg und einem Kontaktsteckanschlussbereich integral ausgebildet ist, wobei vorteilhafterweise der Motorgehäusedeckel als Kunststoff-Metall-Verbundbauteil, also in Kunststoff-Metall-Verbundtechnologie, ausgebildet ist.

Eine hohe Variabilität im Einbau bzw. in der Anbindbarkeit an ein Ansteuergerät kann weiter dadurch vorgesehen werden, dass der Motorgehäusedeckel mit dem Motorgehäuse in einer Mehrzahl von bezüglich einander um eine Motorgehäuse-Längsachse verdrehten Montagepositionierungen verbindbar ist.

Die vorliegende Erfindung betrifft ferner ein Gebläse, insbesondere für ein Fahrzeugheizgerät, umfassend ein erfindungsgemäß aufgebautes Gebläsegehäuse sowie einen in dem Gebläsegehäuse angeordneten Elektromotor mit einem Stator und einem Rotor. Der Rotor kann eine Rotorwelle umfassen. Diese kann vorzugsweise am ersten Bodenbereich oder/und am zweiten Bodenbereich gelagert sein, wobei bei Lagerung am zweiten Bodenbereich der Motorgehäusedeckel nicht nur die Funktionalität des Abschlusses des Innenraums des Motorgehäuses und der elektrischen Kontaktierung, sondern auch der Lagerung übernehmen kann.

Um das Gebläse nach Art eines Seitenkanalgebläses auszubilden, wird vorgeschlagen, dass im Bereich des ersten axialen Endbereichs der Umfangswandung der erste Bodenbereich sich radial bezüglich einer Motorgehäuse-Längsachse über die Umfangswandung hinaus erstreckt, dass an einer von der Umfangswandung abgewandten Axialseite der ersten Bodenwandung ein sich ringartig um die Motorgehäuse-Längsachse erstreckender Förderkanal in der ersten Bodenwandung vorgesehen ist, und dass an einer die erste Bodenwandung durchsetzenden Rotorwelle ein den Förderkanal überdeckendes Förderrad getragen ist.

Die vorliegende Erfindung wird nachfolgend mit Bezug auf die beiliegenden Figuren detailliert beschrieben. Es zeigt:
- Fig. 1: eine perspektivische Ansicht eines Gebläses für ein Fahrzeugheizgerät;
- Fig. 2: eine der Fig. 1 entsprechende Ansicht eines Fahrzeuggebläses mit von einem Motorgehäuse eines Gebläsegehäuses abgenommenem Motorgehäusedeckel;

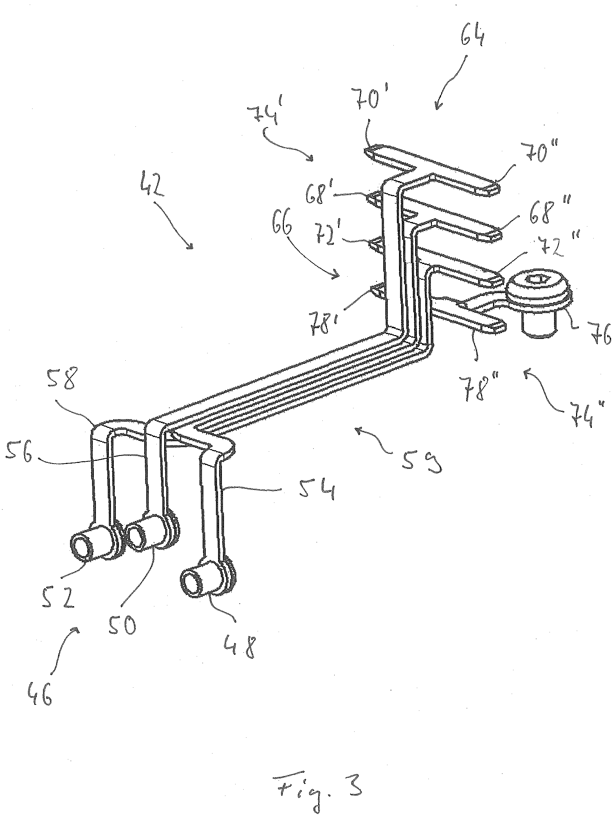

- Fig. 3: die elektrisch leitenden Baugruppen einer Kontaktieranordnung des Gebläsegehäuses des in den Fig. 1 und 2 dargestellten Gebläses.

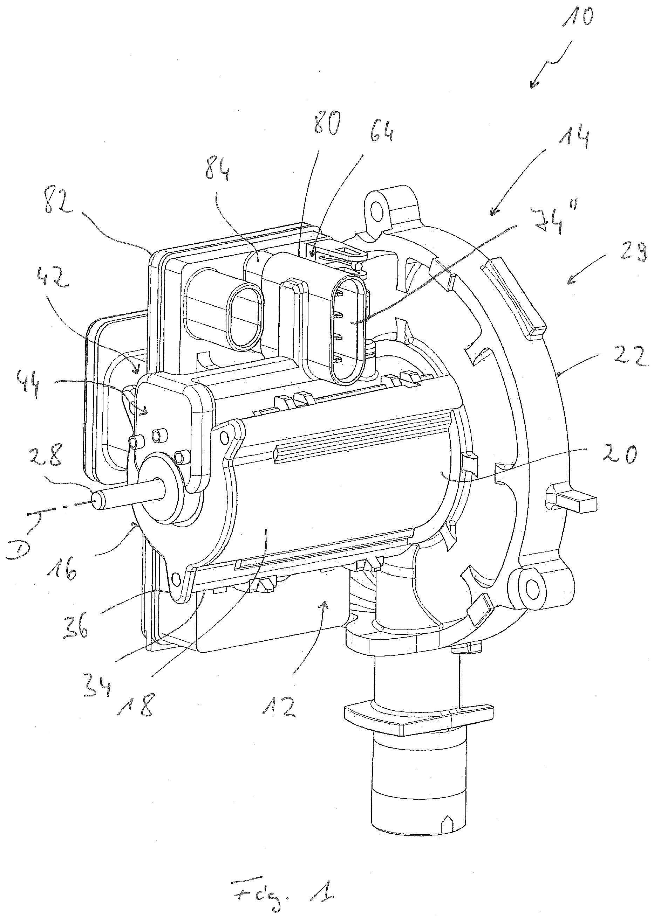

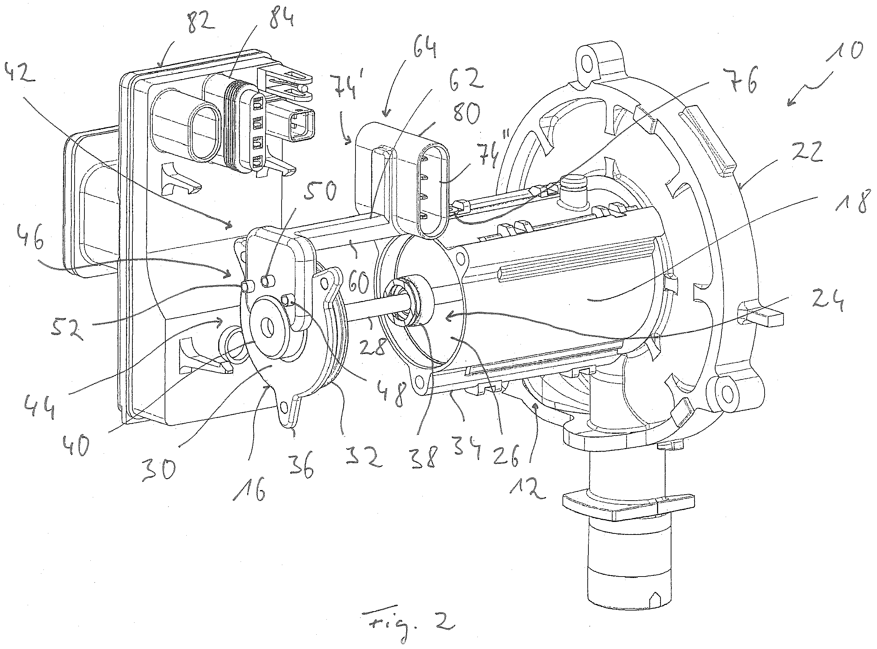

Die Fig. 1 und 2 zeigen in perspektivischer Ansicht ein allgemein mit 10 bezeichnetes Gebläse, welches als so genanntes Seitenkanalgebläse ausgebildet ist und dazu genutzt werden kann, in einem Fahrzeugheizgerät die zur Verbrennung mit Brennstoff erforderliche Verbrennungsluft in Richtung zu einer Brennkammer zu fördern.

Das Gebläse 10 umfasst ein allgemein mit 12 bezeichnetes Gebläsegehäuse. Das Gebläsegehäuse 12 umfasst ein Motorgehäuse 14 sowie einen damit zu verbindenden Motorgehäusedeckel 16. Das Motorgehäuse 14 ist mit einer Umfangswandung 18 und an einem ersten axialen Endbereich 20 derselben einem allgemein mit 22 bezeichneten ersten Bodenbereich aufgebaut. Die Umfangswandung 18 und der erste Bodenbereich 22 umgrenzen einen Innenraum 24 des Motorgehäuses 12, in welchem ein in Fig. 2 teilweise erkennbarer Elektromotor 26 aufgenommen ist. Der Elektromotor 26 umfasst einen beispielsweise an der Umfangswandung 18 fest getragenen Stator sowie einen Rotor mit einer um eine Drehachse drehbaren Rotorwelle 28, wobei diese Drehachse der Rotorwelle 28 gleichzeitig auch einer Motorgehäuse-Längsachse D entsprechen kann, entlang welcher die beispielsweise im Wesentlichen zylindrisch aufgebaute Umfangswandung 18 sich erstreckt.

Der erste Bodenbereich 22 erstreckt sich bezüglich der Motorgehäuse-Längsachse D radial über die Umfangswandung 18 hinaus und stellt beispielsweise in dem über die Umfangswandung 18 sich hinaus erstreckenden Radialerstreckungsbereich einen um die Motorgehäuse-Längsachse D sich ringartig erstreckenden Förderkanal bereit, der zu einer in den Figuren nicht erkennbaren Axialseite 29 des Bodenbereichs 22 offen ist. Ein in den Figuren ebenfalls nicht dargestelltes Förderrad ist an einem den ersten Bodenbereich 22 durchsetzenden Endbereich der Rotorwelle 28 getragen und überdeckt mit seinem Förderschaufeln aufweisenden Förderbereich den Förderkanal, so dass bei Rotation des Förderrads Luft unter Druckaufbau in Umfangsrichtung entlang des Förderkanals gefördert wird und diesen im Bereich eines Unterbrecherbereichs verlassen kann.

Aus Stabilitätsgründen ist das Motorgehäuse 12 mit seiner Umfangswandung 18 und dem ersten Bodenbereich 22 vorzugsweise aus Metallmaterial, beispielsweise Aluminium in einem Aluminium-Druckgussverfahren, hergestellt. Der in dem in Fig. 1 erkennbaren Zusammenbauzustand den Innenraum 26 des Motorgehäuses 14 abschließende Motorgehäusedeckel 16 ist vorzugsweise aus Kunststoffmaterial, beispielsweise als Kunststoffspritzgussteil, hergestellt.

Der Motorgehäusedeckel 16 stellt einen den Innenraum 26 im Wesentlichen in axialer Richtung abschließenden zweiten Bodenbereich 30 bereit. Von diesem kann ein in Richtung der Motorgehäuse-Längsachse D sich erstreckender, näherungsweise zylindrisch gestalteter Eingriffsbereich 32 abstehen, der im Zusammenbauzustand in die Umfangswandung 18 eingreift, um einen Abschluss des Innenraums 26 zu gewährleisten. An drei beispielsweise gleichmäßig, also einem Winkelabstand von 120°, zueinander an der Umfangswandung 18 vorgesehenen, nach radial außen vorstehenden Verbindungsbereichen 34 kann der Motorgehäusedeckel 16 mit vom zweiten Bodenbereich 30 nach radial außen vorspringenden Verbindungsvorsprüngen 36 unter Einsatz von Schraubelementen oder dergleichen festgelegt werden. Aufgrund der gleichmäßigen Umfangsbeabstandung sowohl der Verbindungsbereiche 34, als auch der Verbindungsvorsprünge 36 besteht die Möglichkeit, den Motorgehäusedeckel 16 in einer Mehrzahl von verschiedenen Positionierungen am Motorgehäuse 12 festzulegen. Hier könnte selbstverständlich eine andere Anzahl an Verbindungsbereichen 34 bzw. Verbindungsvorsprüngen 36 vorgesehen sein, um dementsprechend auch eine entsprechend andere Anzahl an Relativpositionierungen des Motorgehäusedeckels 16 bezüglich des Motorgehäuses 12 erlangen zu können.

Die Rotorwelle 28 des Elektromotors 26 ist vorzugsweise sowohl im Bereich des von dieser durchsetzten ersten Bodenbereichs 22, als auch im Bereich des von dieser durchsetzten zweiten Bodenbereichs 30 beispielsweise unter Einsatz jeweiliger Lagerungen 38, beispielsweise Wälzkörperlager oder Gleitlager, drehbar gelagert. Hierzu kann im jeweiligen Bodenbereich 22 oder/und 30 eine die Lagerung 38 aufnehmende Aussparung vorgesehen sein, welche im Bodenbereich 30 an einem Ansatz 40 ausgebildet ist. In dem in Fig. 1 nach links hervorstehenden Endbereich der Rotorwelle 28 kann diese ein weiteres Förderrad tragen, so dass nicht nur das dem ersten Bodenbereich 22 gegenüberliegend zu positionierende Förderrad zum Fördern von Verbrennungsluft mit der Rotorwelle 28 rotiert, sondern beispielsweise auch ein zum Fördern von Heizluft eingesetztes Förderrad durch die Rotorwelle 28 zur Drehung angetrieben wird bzw. mit dieser zusammen rotiert.

Am Motorgehäusedeckel 16 ist eine allgemein mit 42 bezeichnete Kontaktieranordnung vorgesehen. Die Kontaktieranordnung 42 umfasst in einem im Bereich des Bodenbereichs 30 vorgesehenen ersten Kontaktierbereich 44 eine erste Kontaktierformation 46 zur elektrischen Kontaktierung des im Innenraum 24 angeordneten Elektromotors 26. Die erste Kontaktierformation 46 umfasst drei Kontaktelemente 48, 50, 52, die im dargestellten Beispiel als buchsenartig ausgebildete Steckkontaktelemente aufgebaut sind und insbesondere auch an einer dem Innenraum 24 des Motorgehäuses 12 zugewandt zu positionierenden Seite des zweiten Bodenbereichs 30 bzw. des Gehäusedeckels 16 zur Herstellung einer elektrisch leitenden Verbindung mit dem Elektromotor 26 frei liegen. Beispielsweise können an einer axialen Stirnseite des Elektromotors 26 bzw. des Stators desselben in Zuordnung zu den drei Kontaktelementen 48, 50, 52 jeweilige Motorkontaktelemente, beispielsweise ausgebildet als Steckkontaktstifte, vorgesehen sein. Beim axialen Heranführen des Motorgehäusedeckels 16 an das Motorgehäuse 14 können diese Steckkontaktstifte in die buchsenartig ausgebildeten Kontaktelemente 48, 50, 52 eintreten, so dass dabei die elektrische Anbindung der Kontaktierformation 46 an den Elektromotor 26 erfolgt. Dabei können, aber müssen nicht notwendigerweise, die Kontaktelemente 48, 50, 52 nach außen hin, also vom Innenraum 24 des Motorgehäuses 12 weg, frei liegen. Sie können an der Außenseite des Motorgehäusedeckels 16 auch von dessen Aufbaumaterial überdeckt sein.

Die Kontaktieranordnung 42 umfasst ferner von der ersten Kontaktierformation 46 weg führende Leiterbahnen 54, 56, 58 einer Leiterbahnformation 59. Diese Leiterbahnen 54, 56, 58 können beispielsweise durch Ausstanzen aus einem Blechrohling als Flachmaterialbahnen aus Metallmaterial aufgebaut sein und können in ihren der ersten Kontaktierformation 46 nahe liegenden Endbereichen ringartig ausgebildet sein, um die Kontaktelemente 48, 50, 52 beispielsweise in diese einzupressen und somit auch elektrisch leitend fest zu verbinden. Die Leiterbahnen 54, 56, 58 führen ausgehend von den Kontaktelementen 48, 50, 52 zunächst im zweiten Bodenbereich 30 des Gehäusedeckels 16 im Wesentlichen nach radial außen, also von der Motorgehäuse-Längsachse D weg und gehen dann in in einem Verbindungssteg 60 des Motorgehäusedeckels 16 sich erstreckende Abschnitte über. Diese Abschnitte liegen mit geringem, gleichwohl für eine elektrische Isolierung ausreichenden Abstand übereinander, also radial gestaffelt, und sind, ebenso wie die von den Kontaktelementen 48, 50, 52 radial weg führenden Abschnitte und teilweise auch die Kontaktelemente 48, 50, 52 selbst, in das Aufbaumaterial des Motorgehäusedeckels 16 eingebettet.

In einem vom zweiten Bodenbereich 30 entfernten Endbereich 62 des Verbindungsstegs 60 ist ein zweiter Kontaktierbereich 64 der Kontaktieranordnung 42 bereitgestellt. Der zweite Kontaktierbereich 64 liegt nach außen hin frei. Nach außen bedeutet hier außerhalb des Innenraums 24 des Motorgehäuses 12. Im zweiten Kontaktierbereich 64 ist eine zweite Kontaktierformation 64 vorgesehen, welche in Zuordnung zu jeder der Leiterbahnen 54, 56, 58 und somit in Zuordnung zu jedem Kontaktelement 48, 50, 52 der ersten Kontaktierformation 46 zwei Kontaktelemente 68', 68", 70', 70", 72', 72" umfasst. Diese paarweise jeweils einem Kontaktelement 48, 50, 52 der ersten Kontaktierformation 46 zugeordneten Kontaktelemente 68', 68", 70', 70", 72', 72" der zweiten Kontaktierformation 64 erstrecken sich voneinander in entgegengesetzter Richtung weg, so dass im zweiten Kontaktierbereich 64 zwei Kontaktsteckbereiche 74' bzw. 74" gebildet werden können. In jedem Kontaktsteckbereich 74', 74" liegen jeweils drei Kontaktelemente bzw. Steckkontaktelemente 68', 70', 72' bzw. 68", 70", 72" übereinander, also bezüglich der Motorgehäuse-Längsachse D radial gestaffelt. Ferner ist ein Massekontakt 76 mit in Zuordnung zu jedem Kontaktsteckbereich 74', 74" vorgesehenen Massekontaktelementen 78', 78" vorgesehen. Über diesen Massekontak 76, welcher beispielsweise durch Schraubverbindung elektrisch leitend an das an aus Metallmaterial aufgebaute Motorgehäuse 14 angebunden werden kann, kann eine Erdung des Motorgehäuses 14 realisiert werden.

Der Motorgehäusedeckel 16 ist mit seinem zweiten Bodenbereich 30, dem Verbindungssteg 60 und dem am Endbereich 62 des Verbindungsstegs 60 vorgesehenen und die Kontaktsteckbereiche 74', 74", diese beispielsweise ausgebildet als Steckeraufnahmeaussparungen, bereitstellenden Kontaktsteckanschlussbereich 80 integral, also als ein Materialblock bereitgestellt. In das Kunststoff-Aufbaumaterial des Gehäusedeckels 16 sind durch Kunststoff-Metall-Verbundtechnologie die elektrisch leitenden Komponenten der Kontaktieranordnung 42 eingebettet, also im Wesentlichen die Leiterbahnen 54, 56, 58 sowie teilweise die Kontaktelemente 48, 50, 52 bzw. 68', 68", 70', 70", 72', 72" sowie auch teilweise der Massekontakt 76. Somit wird ein einfach realisierbarer, gleichwohl stabiler Aufbau geschaffen. Durch das Bereitstellen des entlang der Umfangswandung 18 sich vorzugsweise in Richtung der Motorgehäuse-Längsachse D erstreckenden Verbindungsstegs 60 wird die Möglichkeit geschaffen, die Kontaktsteckbereiche 74', 74" des zweiten Kontaktierbereichs 64 beispielsweise im Längenmittenbereich der Umfangswandung 18 anzuordnen, so dass in einfacher Art und Weise beispielsweise unter Einsatz eines Verbindungssteckers 82, welcher mit einem Steckerbereich 84 an einen der Kontaktsteckbereiche 74' oder 74" angesteckt werden kann, eine elektrische Verbindung zu einem in den Figuren nicht dargestellten Ansteuergerät hergestellt werden kann. Dabei kann aufgrund des Bereitstellens zweier in entgegengesetzter Richtung weisender Kontaktsteckbereiche 74', 74" die elektrische Anbindung des Verbindungssteckers 82 von zwei Seiten her erfolgen. In Verbindung damit, dass der Motorgehäusedeckel 16 in drei verschiedenen Positionierungen bezüglich des Motorgehäuses 12 festgelegt werden kann, besteht somit eine hohe Variabilität in der räumlichen Positionierung auch des Verbindungssteckers 82 bzw. eines Steuergeräts bezüglich des Gebläses 10.

## Patentansprüche

1. Gebläsegehäuse, umfassend:
- ein Motorgehäuse (14) mit einer Umfangswandung (18) und einem ersten Bodenbereich (22) in einem ersten axialen Endbereich (20) der Umfangswandung (18),
- einen in einem zweiten axialen Endbereich der Umfangswandung (18) mit dem Motorgehäuse (14) verbindbaren und einen zweiten Bodenbereich (30) bereitstellenden Motorgehäusedeckel (16),
**dadurch gekennzeichnet,**
**dass** an dem Motorgehäusedeckel (16) eine Kontaktieranordnung (42) zur elektrischen Kontaktierung eines in dem Gebläsegehäuse (12) anzuordnenden Elektromotors (26) vorgesehen ist, wobei die Kontaktieranordnung (42) in einem ersten Kontaktierbereich (44) eine erste Kontaktierformation (46) wenigstens an einer einem Innenraum (24) des Motorgehäuses (12) zugewandt zu positionierenden Seite des Motorgehäusedeckels (16) umfasst, in einem nach außen frei liegenden zweiten Kontaktierbereich (64) eine zweite Kontaktierformation (66) umfasst, sowie eine die erste Kontaktierformation (64) mit der zweiten Kontaktierformation (66) leitend verbindende Leiterbahnformation (59) umfasst,
und **dass** der Motorgehäusedeckel (16) mit dem Motorgehäuse (14) in einer Mehrzahl von bezüglich einander um eine Motorgehäuse-Längsachse (D) verdrehten Montagepositionen verbindbar ist.

2. Gebläsegehäuse nach Anspruch 1,
**dadurch gekennzeichnet, dass** die Kontaktieranordnung (42) wenigstens teilweise in ein Aufbaumaterial des Motorgehäusedeckels (16) eingebettet ist.

3. Gebläsegehäuse nach Anspruch 1 oder 2,
**dadurch gekennzeichnet, dass** die erste Kontaktierformation (46) eine Mehrzahl von ersten Kontaktelementen (48, 50, 53) umfasst, dass die zweite Kontaktierformation (66) in Zuordnung zu jedem ersten Kontaktelement (48, 50, 52) wenigstens ein zweites Kontaktelement (68', 68", 70', 70", 72', 72") umfasst, und dass die Leiterbahnformation (59) in Zuordnung zu jedem ersten Kontaktelement (48, 50, 52) eine dieses mit wenigstens einem zugeordneten zweiten Kontaktelement (68', 68", 70', 70", 72', 72") verbindende Leiterbahn (54, 56, 58) umfasst.

4. Gebläsegehäuse nach Anspruch 3,
**dadurch gekennzeichnet, dass** wenigstens ein Leiterbahnelement (54, 56, 58) mit einem zugeordneten ersten Kontaktelement (48, 50, 52) oder/und wenigstens einem zugeordneten zweiten Kontaktelement (68', 68", 70', 70", 72', 72") integral ausgebildet ist.

5. Gebläsegehäuse nach Anspruch 3 oder 4,
**dadurch gekennzeichnet, dass** wenigstens ein erstes Kontaktelement (48, 50, 52) oder/und wenigstens ein zweites Kontaktelement (68', 68", 70', 70", 72', 72") ein Steckkontaktelement umfasst.

6. Gebläsegehäuse nach einem der Ansprüche 1 bis 5,
**dadurch gekennzeichnet, dass** der Motorgehäusedeckel (16) einen den ersten Kontaktierbereich (46) mit dem zweiten Kontaktierbereich (64) verbindenden, bei an dem Motorgehäuse (14) angebrachtem Motorgehäusedeckel (16) sich wenigstens bereichsweise entlang der Umfangswandung (18) erstreckenden Verbindungssteg (60) umfasst.

7. Gebläsegehäuse nach Anspruch 6,
**dadurch gekennzeichnet, dass** der zweite Kontaktierbereich (64) an einem von dem zweiten Bodenbereich (30) entfernt liegenden Endbereich (62) des Verbindungsstegs (60) einen Kontaktsteckanschlussbereich (80) umfasst.

8. Gebläsegehäuse nach Anspruch 7,
**dadurch gekennzeichnet, dass** der zweite Bodenbereich (30) des Motorgehäusedeckels (16) mit dem Verbindungssteg (60) und dem Kontaktsteckanschlussbereich (80) integral ausgebildet ist.

9. Gebläsegehäuse nach einem der Ansprüche 1 bis 8,
**dadurch gekennzeichnet, dass** der Motorgehäusedeckel (16) als Kunststoff-Metall-Verbundbauteil ausgebildet ist.

10. Gebläse, umfassend ein Gebläsegehäuse (12) nach einem der vorhergehenden Ansprüche und einen in dem Gebläsegehäuse (12) angeordneten Elektromotor (26) mit einem Stator und einem Rotor.

11. Gebläse nach Anspruch 10, **dadurch gekennzeichnet, dass** der Rotor eine Rotorwelle (28) umfasst, und dass die Rotorwelle (28) am ersten Bodenbereich (22) oder/und am zweiten Bodenbereich (30) gelagert ist.

12. Gebläse nach Anspruch 10 oder 11, **dadurch gekennzeichnet, dass** im Bereich des ersten axialen Endbereichs (20) der Umfangswandung (18) der erste Bodenbereich (22) sich radial bezüglich einer Motorgehäuse-Längsachse (D) über die Umfangswandung (18) hinaus erstreckt, dass an einer von der Umfangswandung (18) abgewandten Axialseite (29) der ersten Bodenwandung (22) ein sich ringartig um die Motorgehäuse-Längsachse (D) erstreckender Förderkanal in der ersten Bodenwandung (22) vorgesehen ist, und dass an einer die erste Bodenwandung (22) durchsetzenden Rotorwelle (18) ein den Förderkanal überdeckendes Förderrad getragen ist.

## Claims

1. Blower housing, comprising:
- a motor housing (14) with a circumferential wall (18) and with a first bottom area (22) in a first axial end area (20) of the circumferential wall (18),
- a motor housing cover (16) capable of being connected to the motor housing (14) in a second axial end area of the circumferential wall (18) and providing a second bottom area (30),
**characterized in that**
a contacting arrangement (42) is provided on the motor housing cover (16) for electrical contacting of an electric motor (26) to be arranged in the blower housing (12), wherein the contacting arrangement (42) in a first contacting area (44) comprises a first contacting formation (46) at least on a side of the motor housing cover (16) to be positioned facing an interior (24) of the motor housing (12), and comprises a second contacting formation (66) in a second contacting area (64) exposed to the outside, and comprises a strip conductor formation (59) conductively connecting the first contacting formation (46) to the second contacting formation (66), and **in that** the motor housing cover (16) can be connected to the motor housing (14) in a plurality of mounting positions rotated in relation to one another about a motor housing longitudinal axis (D).

2. Blower housing according to claim 1,
**characterized in that** the contacting arrangement (42) is at least partially embedded in a material of which the motor housing cover (16) is made.

3. Blower housing according to claim 1 or 2,
**characterized in that** the first contacting formation (46) comprises a plurality of first contact elements (48, 50, 52), that the second contacting formation (66) comprises at least one second contact element (68', 68", 70', 70", 72', 72") in association with each first contact element (48, 50, 52), and that the strip conductor formation (59), in association with each first contact element (48, 50, 52), comprises a strip conductor (54, 56, 58) connecting this [contact element] with at least one associated second contact element (68', 68", 70', 70", 72', 72").

4. Blower housing according to claim 3,
**characterized in that** at least one strip conductor element (54, 56, 58) is designed as integral with an associated first contact element (48, 50, 52) or/and at least one associated second contact element (68', 68", 70', 70", 72', 72").

5. Blower housing according to claim 3 or 4,
**characterized in that** at least one first contact element (48, 50, 52) or/and at least one second contact element (68', 68", 70', 70", 72', 72") comprises a plug contact element.

6. Blower housing according to one of the claims 1 to 5,
**characterized in that** the motor housing cover (16) comprises a connection web (60) connecting the first contacting area (46) to the second contacting area (64), extending along the circumferential wall (18) at least in some areas with the housing cover (16) mounted on the motor housing (14).

7. Blower housing according to claim 6,
**characterized in that** the second contacting area (64) comprises a contact plug connection area (80) at an end area (62) of the connection web (60) lying at a distance from the second bottom area (30).

8. Blower housing according to claim 7,
**characterized in that** the second bottom area (30) of the motor housing cover (16) is designed as integral with the connection web (60) and with the contact plug connection area (80).

9. Blower housing according to one of the claims 1 to 8,
**characterized in that** the motor housing cover (16) is designed as a plasticmetal composite component.

10. Blower, especially for a motor vehicle, comprising a blower housing (12) according to one of the above claims and an electric motor (26) with a stator and with a rotor arranged in the blower housing (12).

11. Blower according to claim 10,
**characterized in that** the rotor comprises a rotor shaft (28), and that the rotor shaft (28) is mounted at the first bottom area (22) or/and at the second bottom area (30).

12. Blower according to claim 10 or 11,
**characterized in that** in the area of the first axial end area (20) of the circumferential wall (18), the first bottom area (22) extends radially beyond the circumferential wall (18) in relation to a motor housing longitudinal axis (D), that a delivery channel extending in a ring-like manner about the motor housing longitudinal axis (D) on an axial side (29) of the first base wall (22) facing away from the circumferential wall (18) is provided in the first base wall (22), and that a delivery wheel overlapping the delivery channel is supported on a rotor shaft (28) traversing the first base wall (22).

## Revendications

1. Boîtier de ventilateur, comprenant:
- un boîtier de moteur (14) avec une paroi circonférentielle (18) et une première région de fond (22) dans une première région d'extrémité axiale (20) de la paroi circonférentielle (18),
- un couvercle de boîtier de moteur (16) capable d'être connecté au boîtier de moteur (14) dans une deuxième région d'extrémité axiale de la paroi circonférentielle (18) et prévoyant une deuxième région de fond (30),
**caractérise en ce**
**qu'**un arrangement de contact (42) est prévu au couvercle de boîtier de moteur (16) pour la prise de contact d'un moteur électrique (26) à arranger dans le boîtier de ventilateur (12), l'arrangement de contact (42) comprenant dans une première région de contact (44) une première formation de contact (46) au moins à un côté du couvercle de boîtier de moteur (16) à positionner face à un intérieur (24) du boîtier de moteur (12), comprenant une deuxième formation de contact (66) dans une deuxième région de contact (64) exposé à l'extérieur, ainsi qu'une formation de piste conductrice (59) connectant la première formation (46) de contact de manière conductrice avec la deuxième formation de contact (66),
et en ce que le couvercle de boîtier de moteur (16) peut être connecté au boîtier de moteur (14) dans une pluralité de positions de montage tournées autour d'un axe longitudinal du boîtier de moteur (D) l'une par rapport à l'autre.

2. Boîtier de ventilateur selon la revendication 1,
**caractérisé en ce que** l'arrangement de contact (42) est au moins partiellement intégré dans un matériel de construction du couvercle de boîtier de moteur (16).

3. Boîtier de ventilateur selon une des revendications 1 ou 2,
**caractérisé en ce que** la première formation de contact (46) comprend une pluralité de premiers éléments de contact (48, 50, 52), **en ce que** la deuxième formation de contact (66) comprend en association à chaque premier élément de contact (48, 50, 52) au moins un deuxième élément de contact (68', 68", 70', 70", 72', 72") et **en ce que** la formation de piste conductrice (59) comprend en association à chaque premier élément de contact (48, 50, 52) une piste conductrice (54, 56, 68) connectant ce dernier à au moins un deuxième élément de contact (68', 68", 70', 70", 72', 72") associé.

4. Boîtier de ventilateur selon la revendication 3,
**caractérisé en ce qu'**au moins un élément de piste conductrice (54, 56, 58) est formé intégralement avec au moins un premier élément de contact (48, 50, 52) associé ou/et au moins un deuxième élément de contact (68', 68", 70', 70", 72', 72") associé.

5. Boîtier de ventilateur selon les revendications 3 ou 4,
**caractérisé en ce qu'**au moins un premier élément de contact (48, 50, 53) ou/et au moins un deuxième élément de contact (68', 68", 70', 70", 72', 72") comprend un élément de contact à broche.

6. Boîtier de ventilateur selon une des revendications 1 à 5,
**caractérisé en ce que** le couvercle de boîtier de moteur (16) comprend un pont de connexion (60) connectant la première région de contact (46) à la deuxième région de contact (64) et s'étendant au moins partiellement le long de la paroi circonférentielle (18) lorsque le couvercle de boîtier de moteur (16) et monté au boîtier de moteur (14).

7. Boîtier de ventilateur selon la revendication 6,
**caractérisé en ce que** la deuxième région de contact (64) comprend une région de connexion de fiche de contact (80) dans une région d'extrémité (62) du pont de connexion (60) éloignée de la deuxième région de fond (30).

8. Boîtier de ventilateur selon la revendication 7,
**caractérisé en ce que** la deuxième région de fond (30) du couvercle de boîtier de moteur (16) est formée intégralement avec le pont de connexion (60) et la région de connexion de fiche de contact (80).

9. Boîtier de ventilateur selon une des revendications 1 à 8
**caractérisé en ce que** le couvercle de boîtier de moteur (16) est adapté en tant que composite plastique-métal.

10. Ventilateur, comprenant un boîtier de ventilateur (12) selon une des
revendications précédentes, et un moteur électrique arrangé dans le boîtier de ventilateur (12) avec un stator et un rotor.

11. Ventilateur selon la revendication 10,
**caractérisé en ce que** le rotor comprend un arbre de rotor (28) et **en ce que** l'arbre de rotor (28) est monté à la première région de fond (22) ou/et à la deuxième région de fond (30).

12. Ventilateur selon les revendications 10 ou 11,
**caractérisé en ce que** dans la première région d'extrémité axiale (20) de la paroi circonférentielle (18) la première région de fond (22) s'étend radialement au-delà de la paroi circonférentielle (18) par rapport à un axe longitudinal du boîtier de moteur (D) **en ce qu'**à un côté axial (29) de la première région de fond (22) opposé à la paroi circonférentielle (18) un canal de transport s'étendant de manière annulaire autour de l'axe longitudinal du boîtier de moteur (D) est prévu dans la première région de fond (22) et **en ce qu'**une roue de transport couvrant le canal de transport est supporté à l'arbre de rotor (28) passant à travers la première paroi de fond (22).
